(19) Europäisches Patentamt / European Patent Office / Office européen des brevets

(11) **EP 4 369 619 A1**

(12) **EUROPEAN PATENT APPLICATION**

(43) Date of publication:
**15.05.2024 Bulletin 2024/20**

(21) Application number: **23204257.2**

(22) Date of filing: **18.10.2023**

(51) International Patent Classification (IPC):
**H04B 7/0404** (2017.01)   **H04B 7/0456** (2017.01)

(52) Cooperative Patent Classification (CPC):
**H04B 7/0404; H04B 7/0456**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.11.2022 KR 20220151988
08.03.2023 KR 20230030809**

(71) Applicant: **Samsung Electronics Co., Ltd.
Suwon-si, Gyeonggi-do 16677 (KR)**

(72) Inventors:
• **LEE, Byongok**
  **16677 Suwon-si (KR)**
• **DO, Joohyun**
  **16677 Suwon-si (KR)**
• **YU, Hyunseok**
  **16677 Suwon-si (KR)**

(74) Representative: **Marks & Clerk LLP
15 Fetter Lane
London EC4A 1BW (GB)**

(54) **APPARATUS FOR MULTI-ANTENNA TRANSMISSION AND OPERATING METHOD THEREOF**

(57)    An operating method of a wireless communication user equipment may include transmitting a sounding reference signal (SRS) to a base station, receiving, from the base station, a transmit precoding matrix indicator (TPMI) indicating a precoding matrix and a rank indicator (RI) indicating a rank value, selecting a precoding matrix, based on the TPMI and the RI, allocating a gain to each of a plurality of transmission paths, based on the precoding matrix and loss information of each of the plurality of transmission paths, and transmitting a physical uplink shared channel (PUSCH) through the plurality of transmission paths.

FIG. 7

**Description**

TECHNICAL FIELD

The present invention generally relates to a wireless communication user equipment and an operating method of a wireless communication user equipment..

BACKGROUND

Wireless communication systems may employ various techniques to increase throughput. For example, wireless communication systems may employ multiple-input and multiple-output (MIMO) that increases communication capacity by using a plurality of antennas. As techniques for increasing throughput are employed, a transmitting side may transmit signals with high complexity, whereas a receiving side may process signals with high complexity.

New radio (NR) specifications include a codebook-based transmission mode and a non-codebook-based transmission mode, in relation to uplink multi-antenna precoding. In the case of a codebook-based transmission mode, a precoding matrix usable by a terminal is defined by the standard. The precoding matrix defined by the standard is independent of loss information of a transmission path of a terminal and is equally applied to the entire frequency domain of a transmission signal. In order to increase spectral efficiency, it is desirable to select a precoding matrix by considering loss information of a transmission path of a terminal or a frequency domain of a transmission signal.

SUMMARY

According to a first aspect of the inventive concept, an operating method of a wireless communication user equipment includes: transmitting a sounding reference signal (SRS) to a base station; receiving, from the base station, a transmit precoding matrix indicator (TPMI) indicating a precoding matrix and a rank indicator (RI) indicating a rank value; selecting a precoding matrix among a set of precoding matrices, based on the TPMI and the RI; allocating a gain to each of a plurality of transmission paths within the wireless communication user equipment, based on the precoding matrix and loss information of each of the plurality of transmission paths; and transmitting a physical uplink shared channel (PUSCH) through the plurality of transmission paths to the base station.

According to a second aspect of the inventive concept, a wireless communication user equipment includes: a communication circuit configured to transmit a sounding reference signal (SRS) to a base station and receive, from the base station, a transmit precoding matrix indicator (TPMI) indicating a precoding matrix and a rank indicator (RI) indicating a rank value; and a processor configured to: select a precoding matrix among a set of precoding matrices, based on the TPMI and the RI; calculate a gain allocation matrix, based on loss information of each of a plurality of transmission paths; and allocate a gain to each of the plurality of transmission paths, based on the gain allocation matrix and the precoding matrix, wherein the communication circuit is further configured to transmit a physical uplink shared channel (PUSCH) to the base station through the plurality of transmission paths to which the gain is allocated.

Preferred embodiments are defined by the dependent claims.

BRIEF DESCRIPTION OF THE DRAWINGS

Embodiments of the inventive concept will be more clearly understood from the following detailed description taken in conjunction with the accompanying drawings in which:

FIG. 1 is a diagram of a wireless communication system according to an embodiment;
FIG. 2 is a block diagram of a base station of FIG. 1, according to an embodiment;
FIG. 3 is a block diagram of a wireless communication user equipment of FIG. 1, according to an embodiment;
FIG. 4 is a detailed block diagram of a communication circuit of FIG. 3, according to an embodiment;
FIG. 5 is a diagram of signal exchange between a base station and a wireless communication user equipment, according to an embodiment;
FIGS. 6A and 6B are diagrams of simulation results according to an embodiment;
FIG. 7 is a flowchart of an operating method of a wireless communication user equipment, according to an embodiment;
FIG. 8 is a diagram for describing a transmit precoding matrix indicator (TPMI) resource block group (RBG) bitmap according to an embodiment;
FIG. 9 is a diagram of signal exchange between a base station and a wireless communication user equipment, according to an embodiment;
FIG. 10 is a diagram of a simulation result according to an embodiment; and

FIG. 11 is a flowchart of an operating method of a base station, according to an embodiment.

DETAILED DESCRIPTION OF THE EMBODIMENTS

Generally, we describe that a wireless communication user equipment for performing multi-antenna-based transmission and reception may determine a precoding matrix based on loss information of a transmission path of a terminal or a frequency domain of a transmission signal, and an operating method of the wireless communication user equipment.

Similarly, we describe that a wireless communication user equipment may perform multi-antenna transmission by applying an efficient precoding matrix based on loss information of a transmission path or a frequency of a transmission signal, and to an operating method of the wireless communication user equipment.

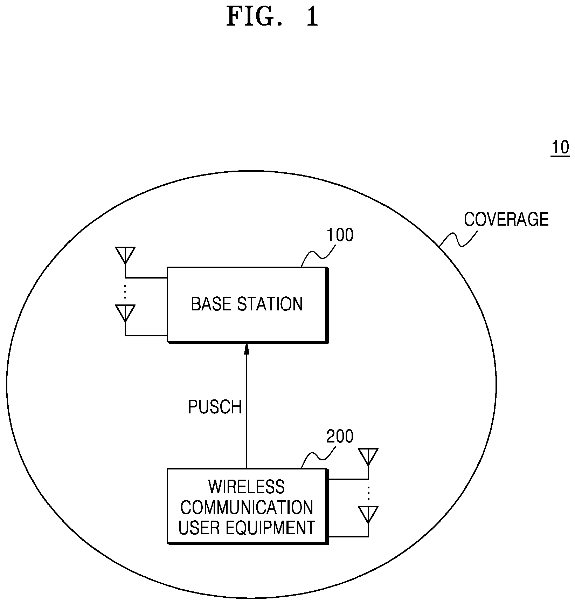

FIG. 1 is a diagram of a wireless communication system 10 according to an embodiment.

Referring to FIG. 1, the wireless communication system 10 includes a base station 100 and a wireless communication user equipment 200. The base station 100 is an infrastructure that provides wireless access to the wireless communication user equipment 200. The base station 100 may have coverage defined as a certain geographical area based on a distance over which a signal may be transmitted. The base station 100 may be referred to as a base station, an 'access point (AP)', an 'evolved node B (eNodeB) (eNB)', a '5th generation (5G) node', a 'next-generation node B (gNodeB) (gNB)', a 'wireless point', or other terms having an equivalent technical meaning.

The base station 100 may receive an uplink signal from the wireless communication user equipment 200 based on a multi-user (MU)-multiple-input and multiple-output (MIMO) technology. For example, the base station 100 may receive a physical uplink shared channel (PUSCH) from the wireless communication user equipment 200. The PUSCH is a channel used for transmitting user data from the wireless communication user equipment 200 to the base station 100 in the uplink direction. The PUSCH is part of the physical layer of the 5G New Radio (NR) standard, for example. The PUSCH channel may use Orthogonal Frequency Division Multiplexing (OFDM) or Orthogonal Frequency Division Multiple Access (OFDMA) modulation techniques to efficiently transmit data over the radio interface.

According to embodiments, the base station 100 may transmit, to the wireless communication user equipment 200, a control signal indicating scheduling. The control signal may include an uplink grant signal. The uplink grant signal may include a transmit precoding matrix indicator (TPMI), a rank indicator (RI), and/or TPMI resource block group (RBG) bitmaps, which will be described below. In some embodiments, the TPMI may be a parameter used in the downlink transmission to indicate a precoding matrix that the wireless communication user equipment 200 is to use for its uplink transmission. Precoding is a technique used in MIMO systems to improve the performance and reliability of wireless communication. Both the base station 100 and the wireless communication user equipment 200 may be equipped with multiple antennas which transmit and receive multiple data streams simultaneously. Such precoding involves applying a specific mathematical transformation to the data before transmission to optimize the signal's characteristics for transmission over the wireless channel. In other words, the TPMI is an index that the base station 100 uses to inform the wireless communication user equipment 200 about the precoding matrix it should or may use for its uplink transmission. The base station 100 may determine the precoding matrix based on the current channel conditions, such as signal quality, channel fading, and interference. By using the recommended precoding matrix indicated by the TPMI, the wireless communication user equipment 200 can align its transmission to match the characteristics of the wireless channel, maximizing the signal's reception quality at the base station 100 and improving the overall data rate and reliability of the uplink communication. In some embodiments, the RI is a parameter used in the downlink transmission to indicate the number of spatial layers that the wireless communication user equipment 200 should or may use for receiving data from the base station 100. Spatial layers are streams of data transmitted on different antennas or antenna ports at the base station 100. For example, the RI is a value signaled by the base station 100 to the wireless communication user equipment 200 in the downlink control information, indicating the number of spatial layers that the wireless communication user equipment should or may use to receive the data. The wireless communication user equipment 200 may use the RI to configure its reception to align with the spatial layers transmitted by the base station 100, ensuring optimal reception of the data and enhancing the overall data throughput and reliability of the downlink communication. By adjusting the number of spatial layers based on the RI, the wireless communication user equipment 200 can adapt its reception strategy to match the current radio conditions, such as signal strength, interference, and channel quality, leading to improved performance and quality of service in the wireless communication. In some embodiments, the TPMI RBG bitmap is a signaling parameter used in the downlink transmission to indicate which resource block groups (RBGs) are available for a specific user in a particular time slot. RBGs are a grouping of resource blocks (RBs) in the frequency domain, and are used to allocate radio resources to the wireless communication user equipment 200 for downlink transmission. For example, the TPMI RBG bitmap is a bitmap that represents the RBGs in a specific subframe or time slot. Each bit in the bitmap corresponds to one RBG, and its value indicates whether the RBG is available (1) or not available (0) for a specific user in that time slot. The base station 100 may use the TPMI RBG bitmap to inform the wireless communication user equipment 200 about the available RBGs for downlink transmission in the given time slot.

Based on the TPMI RBG bitmap, the wireless communication user equipment 200 can determine the specific RBGs for receiving downlink data in the given time slot. The wireless communication user equipment 200 may use the TPMI RBG bitmap to configure its reception and select the appropriate RBGs for receiving data from the base station 100.

The wireless communication user equipment 200 is an apparatus used by a user and may communicate with the base station 100 through a wireless channel. The wireless communication user equipment 200 may be referred to as a terminal, a 'user equipment (UE)', a 'mobile station', a 'subscriber station', a 'customer premises equipment (CPE)', a 'remote terminal', a 'user device', or other terms having an equivalent technical meaning.

According to embodiments, the wireless communication user equipment 200 may be a wireless communication user equipment that is set to a codebook-based transmission mode. The wireless communication user equipment 200 may transmit a sounding reference signal (SRS) to the base station 100 by using at least one antenna port, and the base station 100 may receive the SRS and estimate a channel (e.g., a channel condition) between a transmission antenna port of the wireless communication user equipment 200 and a reception antenna port of the base station 100. Using the received SRS, the base station 100 may estimate the current channel conditions, such as signal quality, channel fading, and interference. The base station 100 may transmit a TPMI and an RI to the wireless communication user equipment 200 based on a result of the channel estimation. In this case, the TPMI may be information indicating a precoding matrix determined by the base station 100 to be appropriate in a selected rank situation, and the RI may be information indicating a rank determined by the base station 100 to be appropriate for wireless communication with the wireless communication user equipment 200, that is, an appropriate uplink transmission layer. The wireless communication user equipment 200 may receive the TPMI and the RI, select a precoding matrix based on the TPMI and the RI, and allocate gains to a plurality of transmission paths, respectively, based on the selected precoding matrix and loss information of each of the plurality of transmission paths of the wireless communication user equipment 200.

According to another embodiment, the wireless communication user equipment 200 may transmit an SRS to the base station 100 by using the at least one antenna port, and the base station 100 may receive the SRS and estimate a channel between the transmission antenna port of the wireless communication user equipment 200 and the reception antenna port of the base station 100. The base station 100 may allocate a frequency resource to be used for transmission of a PUSCH based on a result of the channel estimation. In this case, the frequency resource may include a plurality of RBGs. The base station 100 may generate a TPMI RBG bitmap including information indicating a precoding matrix to be applied to each of the plurality of RBGs, and transmit the TPMI RBG bitmap to the wireless communication user equipment 200. The wireless communication user equipment 200 may transmit a PUSCH to the base station 100 by applying different precoding matrices to the plurality of RBGs, respectively, based on the TPMI RBG bitmap. The PUSCH may be used by the wireless communication user equipment 200 to transmit user data to the base station 100.

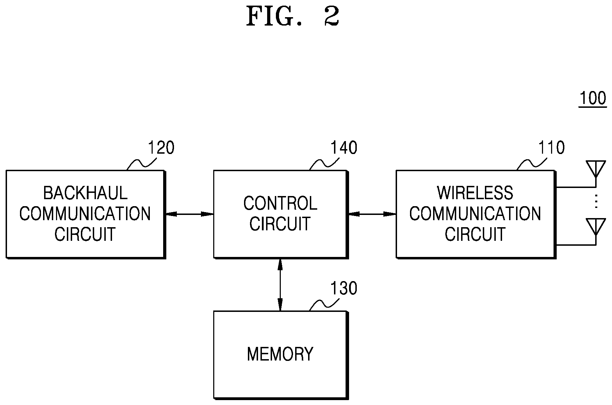

FIG. 2 is a block diagram of the base station 100 of FIG. 1, according to an embodiment.

Referring to FIG. 2, the base station 100 of FIG. 1 may include a wireless communication circuit 110, a backhaul communication circuit 120, a memory 130, and a control circuit 140.

The wireless communication circuit 110 may perform functions for transmitting or receiving a signal through a wireless channel. According to an embodiment, the wireless communication circuit 110 may perform conversion between a baseband signal and a bit string based on physical layer specifications of a system. For example, during data transmission, the wireless communication circuit 110 may generate modulation symbols by encoding and modulating a transmission bit string, and during data reception, may reconstruct a reception bit string by demodulating and decoding a baseband signal. Also, the wireless communication circuit 110 may up-convert a baseband signal into a radio frequency (RF) band signal and then transmit the RF band signal via an antenna, or may down-convert an RF band signal received via the antenna, into a baseband signal. To this end, the wireless communication circuit 110 may include a transmission filter, a reception filter, an amplifier, a mixer, an oscillator, a digital-to-analog converter (DAC), and an analog-to-digital converter (ADC).

The wireless communication circuit 110 may transmit or receive a signal. For example, the wireless communication circuit 110 may transmit a synchronization signal (SS), a reference signal (RS), system information, a message, control information, or data. The RS may include an SRS. For example, the base station 100 may receive an SRS transmitted from the wireless communication user equipment 200 (see FIG. 1) through the wireless communication circuit 110. The wireless communication circuit 110 may apply a beamforming weight to a signal to impart directionality to a signal to be transmitted or received. The wireless communication circuit 110 may repeatedly transmit a signal by changing a formed beam.

The backhaul communication circuit 120 may provide an interface for communicating with other nodes in a network. That is, the backhaul communication circuit 120 may convert a bit string into a physical signal, the bit string being transmitted from the base station 100 to another node, e.g., another access node, another base station, an upper node, a core network, and the like, and convert a physical signal into a bit string, the physical signal being received from another node.

According to an embodiment, the base station 100 may allocate a frequency resource to be used for reception of a PUSCH transmitted by the wireless communication user equipment 200 (see FIG. 1), and the allocated frequency resource may include a plurality of RBGs. The base station 100 may generate a TPMI RBG bitmap including information indicating different precoding matrices to be used respectively for the plurality of RBGs, and transmit the TPMI RBG bitmap to the wireless communication user equipment 200 (see FIG. 1).

The memory 130 may store data, such as basic programs, application programs, and configuration information, for operations of the base station 100. The memory 130 may include a volatile memory, a non-volatile memory, or a combination of a volatile memory and a non-volatile memory. According to an embodiment, the memory 130 may store state information of the channel between the wireless communication user equipment 200 (see FIG. 1) and the base station 100 and/or appropriate precoding matrix information based on a frequency band.

The control circuit 140 may control operations of the base station 100. For example, the control circuit 140 may transmit and receive signals through the wireless communication circuit 110 or the backhaul communication circuit 120. Also, the control circuit 140 may write and read data into and from the memory 130. To this end, the control circuit 140 may include at least one processor.

According to embodiments, the control circuit 140 may generate the state information of the channel between the wireless communication user equipment 200 (see FIG. 1) and the base station 100 and/or the appropriate precoding matrix information based on the frequency band, and generate a TPMI RBG bitmap based on the aforementioned information.

According to another embodiment, the base station 100 may receive a PUSCH transmitted by the wireless communication user equipment 200 (see FIG. 1) through the plurality of transmission paths to which gains are allocated, based on the loss information.

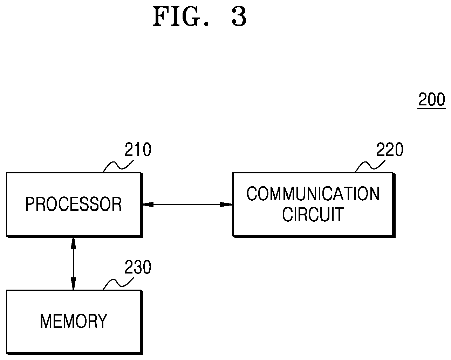

FIG. 3 is a block diagram of the wireless communication user equipment 200 of FIG. 1, according to an embodiment.

Referring to FIG. 3, the wireless communication user equipment 200 of FIG. 1 may include a processor 210, a communication circuit 220, and a memory 230.

The processor 210 may control overall operations of the wireless communication user equipment 200. For example, the processor 210 may transmit or receive a signal through the communication circuit 220. Also, the processor 210 may write or read data into or from the memory 230. To this end, the processor 210 may include at least one processor or a microprocessor, or may be a part of a processor. When the processor 210 is a part of the processor, a part of the communication circuit 220 and the processor 210 may be referred to as a communication processor (CP).

The communication circuit 220 may perform functions for transmitting or receiving a signal to or from the base station 100 (see FIG. 1) through a wireless channel. According to an embodiment, the communication circuit 220 may perform conversion between a baseband signal and a bit string based on physical layer specifications. For example, during data transmission, the communication circuit 220 may generate modulation symbols by encoding and modulating a transmission bit string. For example, during data reception, the communication circuit 220 may reconstruct a reception bit string by demodulating and decoding a baseband signal. Also, the communication circuit 220 may up-convert a baseband signal into an RF band signal and then transmit the RF band signal via an antenna, or may down-convert an RF band signal received via the antenna, into a baseband signal. To this end, the communication circuit 220 may include a transmission filter, a reception filter, an amplifier, a mixer, a DAC, and an ADC.

The communication circuit 220 may transmit or receive a signal. The communication circuit 220 may receive a downlink signal. The downlink signal may include an SS, an RS, system information, a configuration message, control information, or downlink data. Also, the communication circuit 220 may transmit an uplink signal. The uplink signal may include a random access-related signal or an RS (e.g., an SRS or a demodulation (DM)-RS), or uplink data. According to embodiments, the communication circuit 220 may receive a TPMI, an RI, and/or a TPMI RBG bitmap from the base station 100 (see FIG. 1).

The memory 230 may store data, such as basic programs, application programs, and configuration information, for operations of the wireless communication user equipment 200. The memory 230 may include a volatile memory, a non-volatile memory, or a combination of a volatile memory and a non-volatile memory.

When the wireless communication user equipment 200 is in the codebook-based transmission mode, the memory 230 may store a set of precoding matrices. Also, when the processor 210 requests a precoding matrix selected based on the TPMI and the RI from among the set of precoding matrices, the memory 230 may provide, to the processor 210, the selected precoding matrix among the set of precoding matrices stored in the memory 230. Alternatively, when the processor 210 requests a plurality of precoding matrices respectively applied to a plurality of RBGs based on the TPMI RBG bitmap, the memory 230 may provide the plurality of precoding matrices to the processor 210. The precoding matrix is a mathematical transformation applied to the data transmitted from the base station 100 to the wireless communication user equipment 200 or vice versa. The precoding matrix may determine how the data is spatially distributed across the multiple transmit antennas (for downlink) or receive antennas (for uplink). The precoding matrix may be configured based on the channel conditions, such as signal strength, channel quality, and interference to achieve improved data rate, interference reduction, or spatial diversity. The selection and optimization of the precoding matrix may maximize the performance of MIMO systems, enabling high data rates, increased spectral efficiency, and improved overall network performance.

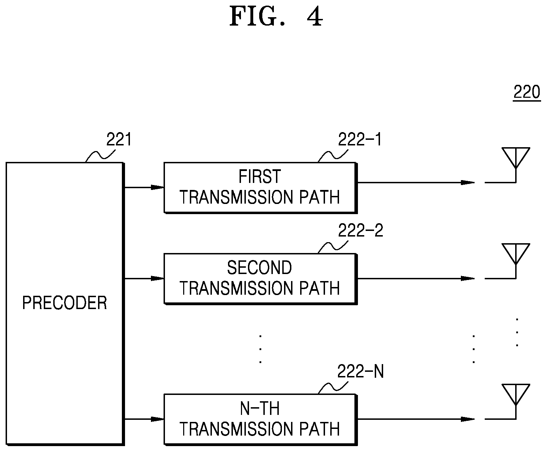

According to embodiments, the communication circuit 220 may receive the TPMI and the RI, and the processor 210 may request a precoding matrix to be applied to transmission of a PUSCH from the memory 230 based on the TPMI and the RI. Also, the processor 210 may calculate loss information of each of a first transmission path 222-1 to an N-th transmission path 222-N of FIG. 4. For example, the processor 210 may calculate loss information of each of the plurality of transmission paths through a calibration process of a transmission signal and/or a power difference between signals received through the plurality of transmission paths. The wireless communication user equipment 200 can estimate the loss information of the transmission paths through the calibration process. The wireless communication user equipment 200 can transmit signals with the same power over each transmission paths. The wireless communication user equipment 200 may receive the transmitted signals and measure the power of the received signals. Based on the power of the received signals and the power of the transmitted signals, the wireless communication user equipment 200 may estimate losses in the transmission paths. For example, if the difference between the power of the transmitted signal and the power of the received signal transmitted over one of the transmission paths is large, the loss information in the transmission path may have a relatively large value. The wireless communication user equipment 200 may alternatively estimate the loss information based on the power of the signal received from the base station 100. For example, if the power of the received signal is relatively low, the loss information of the transmission path may have a relatively large value. The calculated loss information may be stored in the memory 230. The processor 210 may calculate a gain allocation matrix based on the calculated loss information of each of the plurality of transmission paths. The wireless communication user equipment 200 may transmit a precoded PUSCH to the base station 100 (see FIG. 1) based on the precoding matrix selected based on the TPMI and the RI transmitted by the base station 100 and the gain allocation matrix based on the loss information. The gain allocation matrix is described below with reference to FIG. 4. The gain allocation matrix is a parameter used in the uplink transmission to allocate transmission power to different antennas when transmitting data from the wireless communication user equipment 200 to the base station 100. For example, the gain allocation matrix determines the relative power levels that should or may be applied to each transmit antenna in the wireless communication user equipment 200. By adjusting the power allocation, the wireless communication user equipment 200 can control the direction and coverage of the uplink transmission.

FIG. 4 is a detailed block diagram of the communication circuit 220 of FIG. 3, according to an embodiment.

FIG. 4 may be described with reference to FIG. 3.

Referring to FIG. 4, the communication circuit 220 of FIG. 3 may include a precoder 221 and the first transmission path 222-1 to the N-th transmission path 222-N.

An encoder and modulator (not shown) may generate modulation symbols by performing constellation mapping. The wireless communication user equipment 200 (see FIG. 3) may map the modulation symbols to Ns transmission layers based on the RI received from the base station 100 (see FIG. 1). Ns may be an integer greater than or equal to 1 and less than or equal to the number of antenna ports of the wireless communication user equipment 200 (see FIG. 3).

The precoder 221 may map the Ns transmission layers to which the modulation symbols are mapped, to the transmission antenna port of the wireless communication user equipment 200 (see FIG. 3) by using a precoding matrix. When the number of transmission antenna ports is Nt, the precoding matrix may be a matrix having Nt rows and Ns columns. According to an embodiment, Nt and the number of transmission paths N may be equal to each other, and N and Nt may be integers greater than 1.

According to embodiments, loss information of the first transmission path 222-1 to the N-th transmission path 222-N may be different from each other. The loss information may refer to a degree to which the power of a signal transmitted through a transmission path varies due to characteristics of the transmission path. For example, each of the plurality of transmission paths may include a switching element, and the loss information of the plurality of transmission paths may be different from each other due to the characteristics and/or number of switching elements. As described above, the processor 210 (see FIG. 3) may calculate loss information of each of the plurality of transmission paths based on a calibration process and/or a power difference for each path of a received signal.

According to embodiments, the wireless communication user equipment 200 (see FIG. 3) may transmit a precoded PUSCH to the base station 100 (see FIG. 1) based on a precoding matrix and a gain allocation matrix. That is, the wireless communication user equipment 200 (see FIG. 3) may map the Ns transmission layers to the Nt transmission antenna ports through the precoder 221 by using the precoding matrix and the gain allocation matrix, and transmit the PUSCH to the base station 100 (see FIG. 1) through the Nt transmission antenna ports. The gain allocation matrix may be a matrix calculated by the processor 210 (see FIG. 3) based on the loss information of each of the plurality of transmission paths to be used for the transmission of the PUSCH, and a gain corresponding to the loss information may be allocated to each of the plurality of transmission paths based on the gain allocation matrix. The gain can be proportional or inversely proportional to the loss information. For example, if Rank is 2, the loss information and gain can be proportional to each other, and if Rnak is 1, the loss information and gain can be inversely proportional to each other. A gain allocation matrix G may be the same as Equation 1.

[Equation 1]

$$G = \begin{bmatrix} g_0 & \cdots & 0 \\ \vdots & \ddots & \vdots \\ 0 & \cdots & g_{N_t-1} \end{bmatrix}$$

The gain allocation matrix G may be a square matrix having Nt rows and Nt columns, and may also be a diagonal matrix. Each of diagonal components $g_0$ to $g_{N_t-1}$ of the gain allocation matrix G is relative loss information of a corresponding transmission path. For example, relative loss information of the first transmission path 222-1 may be '$g_0$, and relative loss information of the Nt-th transmission path 222-N may be $g_{N_t-1}$. The relative loss information may be determined from the loss information of each of the plurality of transmission paths. For example, the relative loss information may be the ratio of the loss information of a particular transmission path to the sum of the loss information of each of the plurality of transmission paths. However, the present disclosure is not limited thereto and may include various methods for deriving relative loss information from a plurality of loss information.

According to embodiments, the wireless communication user equipment 200 (see FIG. 3) may transmit a precoded PUSCH through the gain allocation matrix G and a precoding matrix selected based on the TPMI and the RI. In this case, the selected precoding matrix may be a matrix having Nt rows and Ns columns. When the wireless communication user equipment 200 (see FIG. 3) transmits a PUSCH to the base station 100 (see FIG. 1), the wireless communication user equipment 200 (see FIG. 3) may transmit a PUSCH to the base station 100 (see FIG. 1) through the Nt transmission paths 222-1 to 222-N to which gains are allocated, the PUSCH being precoded by applying a matrix obtained by multiplying the selected precoding matrix by the gain allocation matrix G.

Referring to the description of FIG. 3, according to embodiments, the processor 210 may calculate loss information. For example, the processor 210 may calculate loss information of each of the Nt transmission paths 222-1 to 222-N. The loss information of the first transmission path 222-1 may be $l_0$, and the loss information of the Nt transmission path 222-N may be $l_{N_t-1}$. The processor 210 may calculate the loss information of each of the Nt transmission paths 222-1 to 222-N and calculate the gain allocation matrix G based on the loss information of each of the Nt transmission paths 222-1 to 222-N. As described above, the gain allocation matrix G may be a diagonal matrix, and the processor 210 may calculate diagonal components of the gain allocation matrix G according to Equation 2 or Equation 3. That is, relative loss information $g_0$ or $g_{N_t-1}$ of each of the Nt transmission paths 222-1 to 222-N may be calculated based on the loss information $l_0$ to $l_{N_t-1}$ of each of the Nt transmission paths 222-1 to 222-N.

[Equation 2]

$$g_i = c_{\mathrm{MRT}} l_i$$

$$c_{\mathrm{MRT}} = \sqrt{\frac{N_t}{\sum_{i=0}^{N_t-1} l_i^2}}$$

[Equation 3]

$$g_i = \frac{c_{\mathrm{comp}}}{l_i}$$

$$c_{\mathrm{comp}} = \sqrt{\frac{N_t}{\sum_{i=0}^{N_t-1} \left(\frac{1}{l_i^2}\right)}}$$

The gain allocation matrix G based on the relative loss information '$g_0$ to $g_{N_t-1}$ of each of the Nt transmission paths 222-1 to 222-N calculated according to Equation 2 may be referred to as a maximum ratio transmission (MRT) based gain allocation matrix. When the wireless communication user equipment 200 (see FIG. 1) transmits a precoded PUSCH through the plurality of transmission paths to which gains are allocated, based on the MRT based gain allocation matrix, it may indicate that MRT gains are assigned to the Nt transmission paths 222-1 to 222-N. Precoding the PUSCH based on an MRT based gain allocation matrix means that, when gains are allocated to the Nt transmission paths 222-1 to 222-N, a relatively large gain is allocated to a transmission path having a relatively small loss. That is, in the case of MRT based gain allocation, a gain may be allocated to each of the Nt transmission paths 222-1 to 222-N in inverse proportion to the relative loss information.

The gain allocation matrix G based on the relative loss information $g_0$ to $g_{N_t-1}$ of each of the Nt transmission paths 222-1 to 222-N calculated according to Equation 3 may be referred to as a compensation based gain allocation matrix. When the wireless communication user equipment 200 (see FIG. 1) transmits a precoded PUSCH through the plurality of transmission paths to which gains are allocated, based on the compensation based gain allocation matrix, it may indicate that compensation gains are assigned to the Nt transmission paths 222-1 to 222-N. Precoding the PUSCH based on the compensation based gain allocation matrix refers to a method of, when gains are allocated to the Nt transmission paths 222-1 to 222-N, allocating a relatively large gain to a transmission path having a relatively large loss. That is, in the case of compensation based gain allocation, a gain may be allocated to each of the Nt transmission paths 222-1 to 222-N in proportion to the relative loss information.

When the relative loss information $g_0$ to $g_{N_t-1}$ of each of the Nt transmission paths 222-1 to 222-N is the same, the wireless communication user equipment 200 (see FIG. 1) may allocate equal gains to the Nt transmission paths 222-1 to 222-N, and the gain allocation matrix G may be referred to as an equal gain allocation matrix.

According to embodiments, the power consumed when the PUSCH is transmitted to the base station 100 (see FIG. 1) based on the MRT based gain allocation matrix or the compensation based gain allocation matrix may be the same, and furthermore, may be equal to the power consumed when the PUSCH is transmitted to the base station 100 (see FIG. 1) by using only the precoding matrix selected based on the TPMI and the RI (e.g., this may be a case where the equal gain allocation matrix is applied), without applying the MRT based gain allocation matrix or the compensation based gain allocation matrix.

According to embodiments, allocating a gain to each of the Nt transmission paths 222-1 to 222-N may refer to increasing a signal output from each of the Nt transmission paths 222-1 to 222-N. For example, the wireless communication user equipment 200 (see FIG. 3) may increase an output signal by increasing an input voltage of an amplifier included in a transmission path to which a relatively large gain is allocated by MRT based gain allocation or compensation based gain allocation, among the Nt transmission paths 222-1 to 222-N.

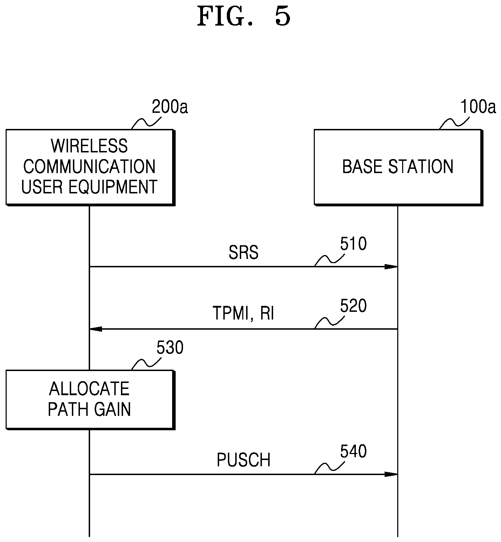

FIG. 5 is a diagram of signal exchange between a base station 100a and a wireless communication user equipment 200a, according to an embodiment.

FIG. 5 may be described with reference to FIG. 4.

Referring to FIG. 5, in operation 510, the wireless communication user equipment 200a may transmit an SRS to the base station 100a. The base station 100a may receive the SRS from the wireless communication user equipment 200a and estimate a channel between the base station 100a and the wireless communication user equipment 200a based on the SRS. That is, the base station 100a may estimate an uplink channel based on the SRS. The base station 100a may estimate downlink information based on channel reciprocity and the SRS.

In operation 520, the wireless communication user equipment 200a may receive a TPMI from the base station 100a. The TPMI may be information indicating a precoding matrix by the base station 100a based on a result of the estimation of the uplink channel described with reference to operation 510. For example, the TPMI corresponds to an index of a set of precoding matrices and may be referred to as an index for selection of a PUSCH precoding matrix. The base station 100a may transmit an RI together with the TPMI to the wireless communication user equipment 200a. The RI may be information indicating a transmission rank determined by the base station 100a to be appropriate based on the result of the estimation of the uplink channel. In this case, the transmission rank is the number of transmission layers and thus is related to a precoding matrix to be used for transmission. The base station 100a may transmit the TPMI and the RI to the wireless communication user equipment 200a through an uplink scheduling grant.

In operation 530, the wireless communication user equipment 200a may select a precoding matrix based on the TPMI and the RI, and allocate a gain to each of a plurality of transmission paths based on the precoding matrix and loss information of each of the plurality of transmission paths. As described above, the processor 210 of FIG. 4 may calculate the loss information of each of the plurality of transmission paths and calculate relative loss information of each of the plurality of transmission paths based on the loss information (see Equation 2 and 3). The wireless communication user equipment 200a may generate a gain allocation matrix based on the relative loss information and transmit a PUSCH to the base station 100a through the plurality of transmission paths to which gains are allocated, based on the gain allocation matrix and the selected precoding matrix.

In operation 540, the wireless communication user equipment 200a may transmit the PUSCH to the base station 100a through the plurality of transmission paths to which gains are allocated, based on the gain allocation matrix.

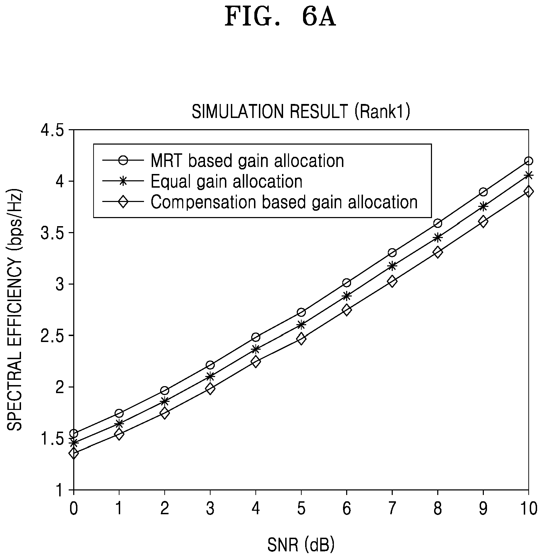

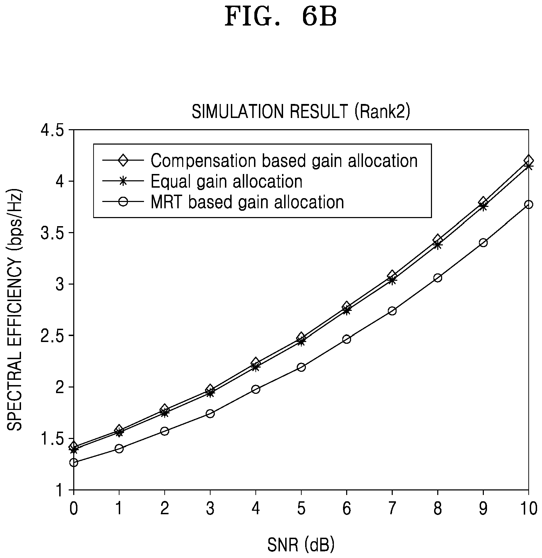

FIGS. 6A and 6B are diagrams of simulation results according to an embodiment.

FIGS. 6A and 6B may be described with reference to FIG. 1.

FIGS. 6A and 6B show, when the wireless communication user equipment 200 (see FIG. 1) transmits a PUSCH through two transmission paths, spectral efficiency according to a signal-to-noise ratio (SNR) in a case where each of the number of transmission antennas (e.g., a transmission antenna of the wireless communication user equipment 200 of FIG. 1) and the number of reception antennas (e.g., a reception antenna of the base station 100 of FIG. 1) is 2, and a difference between relative loss information of the two transmission paths is 3 dB. In addition to the aforementioned conditions, FIG. 6A shows a simulation result when a rank value is 1, and FIG. 6B shows a simulation result when a rank value is 2. The rank value refers to the number of independent data streams that can be transmitted and received simultaneously between the base station 100 and the wireless communication user equipment 200 using the MIMO technology. For example, the rank value indicates the maximum number of spatial streams that can be established between the base station 100 and the wireless communication user equipment 200, which allows for more data to be transmitted and received in parallel. A higher rank value may lead to better data rates and improved network performance, especially in environments with significant channel fading and interference.

The SNR may represent a ratio of signal to noise. As the SNR is lower, noise in a channel between the wireless communication user equipment 200 (see FIG. 1) and the base station 100 (see FIG. 1) is higher, and thus, the quality of the channel may be lower.

The spectral efficiency may refer to the capacity of a channel. As the spectral efficiency is higher, the state of the channel between the wireless communication user equipment 200 (see FIG. 1) and the base station 100 (see FIG. 1) may be excellent, and the reliability of a precoded PUSCH signal transmitted to the base station 100 (see FIG. 1) by the wireless communication user equipment 200 (see FIG. 1) may be higher.

Referring to FIG. 6A, when the rank value is 1, the spectral efficiency is higher in the case where the MRT-based gain allocation matrix is applied compared to cases where the equal gain allocation matrix and the compensation-based gain allocation matrix are applied, across all SNR values.

Referring to FIG. 6B, when the rank value is 2, the spectral efficiency is higher in the case where the compensation-based gain allocation matrix is applied compared to cases where the equal gain allocation matrix and the MRT-based gain allocation matrix are applied, across all the SNR values.

Referring to FIGS. 6A and 6B, a gain allocation method with higher spectral efficiency varies according to a rank value indicated by an RI received by the wireless communication user equipment 200 (see FIG. 1) from the base station 100 (see FIG. 1). Accordingly, the wireless communication user equipment 200 (see FIG. 1) may determine a more efficient gain allocation matrix for the transmission of the PUSCH based on the RI received from the base station 100 (see FIG. 1).

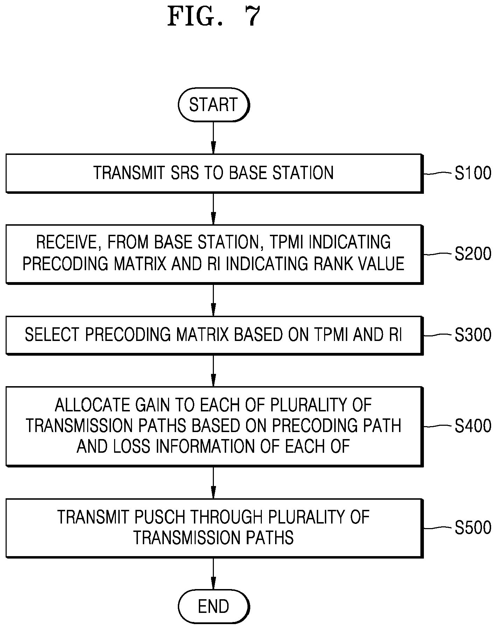

FIG. 7 is a flowchart of an operating method of a wireless communication user equipment, according to an embodiment.

FIG. 7 may be described with reference to FIG. 1.

Referring to FIG. 7, the wireless communication user equipment 200 (see FIG. 1) may transmit an SRS to the base station 100 (see FIG. 1) (S100). The base station 100 (see FIG. 1) may receive the SRS and estimate a channel between the base station 100 (see FIG. 1) and the wireless communication user equipment 200 (see FIG. 1).

The wireless communication user equipment 200 (see FIG. 1) may receive a TPMI indicating a precoding matrix and an RI indicating a rank value from the base station 100 (see FIG. 1) (S200). The base station 100 (see FIG. 1) may transmit, to the wireless communication user equipment 200 (see FIG. 1), an RI indicating a rank value determined to be appropriate for communication and a TPMI indicating a precoding matrix based on a result of the channel estimation.

The wireless communication user equipment 200 (see FIG. 1) may select a precoding matrix based on the TPMI and the RI (S300).

The wireless communication user equipment 200 (see FIG. 1) may allocate a gain to each of a plurality of transmission paths based on the precoding matrix and loss information of each of the plurality of transmission paths (S400). The wireless communication user equipment 200 (see FIG. 1) may calculate relative loss information of each of the plurality of transmission paths based on the loss information of each of the plurality of transmission paths, and allocate a gain to each of the plurality of transmission paths based on the relative loss information. For example, the wireless communication user equipment 200 (see FIG. 1) may allocate a gain to each of the plurality of transmission paths in proportion (compensation based gain allocation) or in inverse proportion (MRT based gain allocation) to the relative loss information.

According to embodiments, the wireless communication user equipment 200 (see FIG. 1) may compare a difference in the loss information of the plurality of transmission paths with a preset first threshold value and allocate equal gains when the difference in the loss information is less than or equal to the preset first threshold value. For example, referring to FIG. 4, when a difference between loss information of the first transmission path 222-1 and loss information of a second transmission path 222-2 is less than or equal to a preset threshold value, the wireless communication user equipment 200 (see FIG. 1) may equally calculate relative loss information of the first transmission path 222-1 and the second transmission path 222-2. Accordingly, equal gains may be allocated to the first transmission path 222-1 and the second transmission path 222-2.

According to another embodiment, the wireless communication user equipment 200 (see FIG. 1) may calculate a variance (hereinafter, referred to as a loss variance value) of the loss information of each of the plurality of transmission paths, compare the loss variance value with a preset second threshold value, and allocate equal gains to the plurality of transmission paths when the loss variance value is less than or equal to the preset second threshold value. For example, referring to FIG. 4, when N is 3, loss information of three transmission paths of the wireless communication device 200 (see FIG. 1) may be 3 between the first and second transmission paths, 5 between the second and third transmission paths, and 4 between the third and first transmission paths, and the preset threshold value may be 1. In this case, because the loss variance value is 2/3, the wireless communication user equipment 200 (see FIG. 1) may allocate equal gains to the three transmission paths through equal gain allocation. In contrast, when the loss information of the three transmission paths is 2 between the first and second transmission paths, 6 between the second and third transmission paths, and 4 between the third and first transmission paths, the loss variance value is 8/3, and thus, the wireless communication user equipment 200 (see FIG. 1) may allocate a gain to each of the three transmission paths through the aforementioned MRT based gain allocation or compensation based gain allocation. For example, MRT based gain allocation can be applied when the Rank value is 1, and compensation based gain allocation can be applied when the Rank value is 2.

The preset first threshold value and the preset second threshold value may be values stored in the memory 230 of FIG. 3, and the memory 230 (see FIG. 3) may provide the first threshold value or the second threshold value to the processor 210 (see FIG. 3) according to a request of the processor 210 (see FIG. 3).

The wireless communication user equipment 200 (see FIG. 1) may transmit a PUSCH to the base station 100 (see FIG. 1) through the plurality of transmission paths (S500). Each of the plurality of transmission paths is a path to which a gain is allocated, based on a gain allocation matrix and a selected precoding matrix, and strength of a signal output from a path to which a relative large gain is allocated may be relatively large.

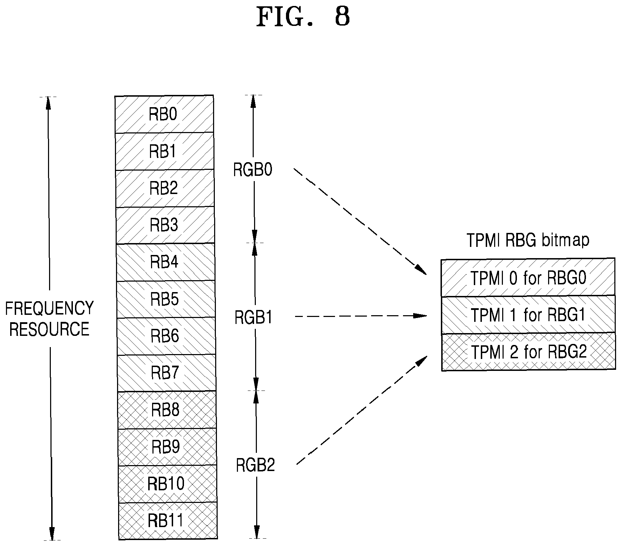

FIG. 8 is a diagram for describing a TPMI RBG bitmap according to an embodiment.

FIG. 8 may be described with reference to FIG. 1.

According to embodiments, the base station 100 (see FIG. 1) may allocate a frequency resource including a plurality of RBGs to be used by the wireless communication user equipment 200 (see FIG. 1) for transmission of a PUSCH, and transmit a TPMI RBG bitmap indicating a precoding matrix to be applied to each of the plurality of RBGs to the wireless communication user equipment 200 (see FIG. 1). Also, the base station 100 (see FIG. 1) may transmit an RI together with the TPMI RBG bitmap to the wireless communication user equipment 200 (see FIG. 1).

Referring to FIG. 8, the base station 100 (see FIG. 1) may allocate frequency domains corresponding to a first RB RB0 to a twelfth RB RB11 to the wireless communication user equipment 200 (see FIG. 1) as frequency domains for transmission of a PUSCH.

Each of a first RBG RBG0 to a third RBG RBG2 may include at least one RB. For example, a first RBG may include a first RB to a fourth RB, a second RBG may include a fifth RB to an eighth RB, and a third RBG may include a ninth RB to a twelfth RB. That is, a plurality of RBs included in each of a plurality of RBGs may consecutive RBs in a frequency domain. For example, the first RBG RBG0 may include four consecutive RBs (e.g., the first RB RB0, a second RB RB1, a third RB RB2, and a fourth RB RB3) in the frequency domain.

Referring to FIG. 8, the TPMI RBG bitmap may include information indicating different precoding matrices respectively for the first RBG RBG0, a second RBG RBG1, and the third RBG RBG2. Accordingly, the wireless communication user equipment 200 (see FIG. 1) may receive the TPMI RBG bitmap and the RI from the base station 100 (see FIG. 1) and transmit a PUSCH to the base station 100 (see FIG. 1) by applying different precoding matrices to the plurality of RBGs based on the TPMI RBG bitmap and the RI.

Applying a different precoding matrix to each of the plurality of RBGs may refer to applying a different precoding matrix for each frequency band. Because the state of a channel between the wireless communication user equipment 200 (see FIG. 1) and the base station 100 (see FIG. 1) may be different for each frequency, the wireless communication user equipment 200 (see FIG. 1) may increase spectral efficiency versus SNR in the transmission of a PUSCH to the base station 100, by applying different precoding matrices respectively to the plurality of RBGs based on the TPMI RBG bitmap and the RI. An optimal precoding matrix applied to each of the plurality of RBGs for increasing the spectral efficiency may be determined considering the state of the channel and the frequency band.

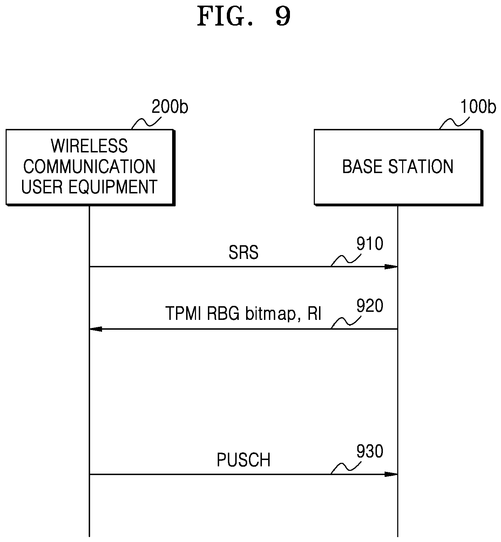

FIG. 9 is a diagram of signal exchange between a base station 100b and a wireless communication user equipment 200b, according to an embodiment.

Referring to FIG. 9, in operation 910, the wireless communication user equipment 200b may transmit an SRS to the base station 100b. The base station 100b may receive the SRS from the wireless communication user equipment 200b and estimate a channel between the base station 100b and the wireless communication user equipment 200b based on the SRS. That is, the base station 100b may estimate an uplink channel based on the SRS. The base station 100b may estimate downlink information based on channel reciprocity and the SRS.

In operation 920, the wireless communication user equipment 200b may receive a TPMI RBG bitmap from the base station 100b. The TPMI RBG bitmap may include information indicating different precoding matrices respectively for a plurality of RBGs. This will be described below with reference to FIG. 9. The base station 100b may transmit an RI together with the TPMI RBG bitmap to the wireless communication user equipment 200b. The RI may be information indicating a transmission rank determined by the base station 100b to be appropriate based on a result of the estimation of the uplink channel. In this case, the transmission rank is the number of transmission layers and thus is related to a precoder matrix to be used for transmission.

In operation 930, the wireless communication user equipment 200b may transmit a PUSCH to the base station 100b by applying different precoding matrices respectively to the plurality of RBGs based on the TPMI RBG bitmap and the RI.

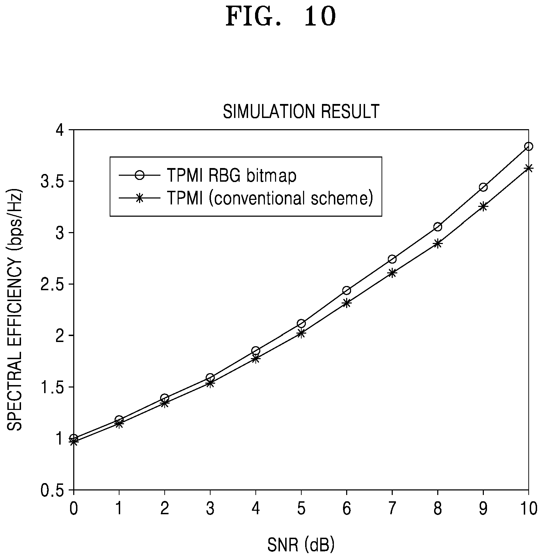

FIG. 10 is a diagram of a simulation result according to an embodiment.

FIG. 10 may be described with reference to FIG. 1.

FIG. 10 shows, when the wireless communication user equipment 200 (see FIG. 1) transmits a PUSCH through two transmission paths, the spectral efficiency according to an SNR in a case where each of the number of transmission antennas (e.g., the transmission antenna of the wireless communication user equipment 200 (see FIG. 1)) and the number of reception antennas (e.g., the reception antenna of the base station 100 (see FIG. 1)) is 2.

Referring to FIG. 10, it may be identified that a case where the wireless communication user equipment 200 (see FIG. 1) transmits a PUSCH by applying different precoding matrices respectively to the plurality of RBGs has higher spectral efficiency than a case where the same precoding matrix is applied to the plurality of RBGs, across all the SNR sections.

FIG. 10 is a flowchart of an operating method of a base station, according to an embodiment.

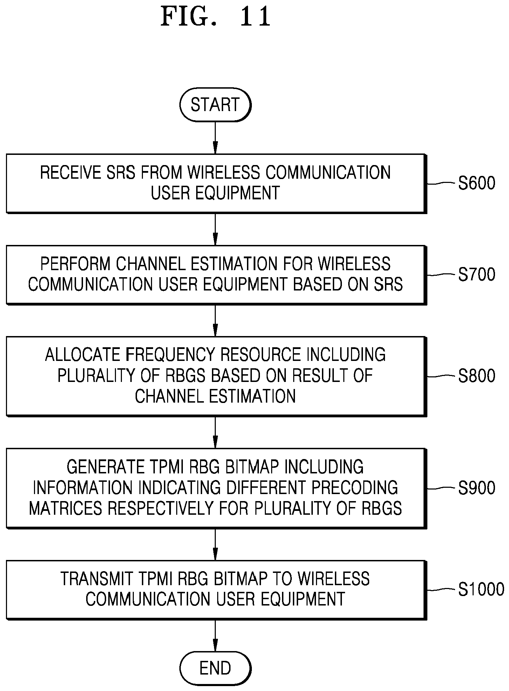

FIG. 11 may be described with reference to FIG. 1.

Referring to FIG. 11, the base station 100 (see FIG. 1) may receive an SRS from the wireless communication user equipment 200 (see FIG. 1) (S600).

The base station 100 (see FIG. 1) may perform channel estimation for the wireless communication user equipment 200 (see FIG. 1) based on the SRS (S700).

The base station 100 (see FIG. 1) may allocate a frequency resource including a plurality of RBGs based on a result of the channel estimation (S800). Each of the plurality of RBGs may include at least one RB, and a plurality of RBs included in one RBG may be consecutive RBs in the frequency domain.

The base station 100 (see FIG. 1) may generate a TPMI RBG bitmap including information indicating different precoding matrices respectively for the plurality of RBGs (S900). The base station 100 (see FIG. 1) may generate a TPMI RBG bitmap including information indicating different precoding matrices respectively for the plurality of RBGs, considering the state of a channel between the wireless communication user equipment 200 (see FIG. 1) and the base station 100 (see FIG. 1) and/or frequency bands of the RBGs.

The base station 100 (see FIG. 1) may transmit the TPMI RBG bitmap to the wireless communication user equipment 200 (see FIG. 1) (S1000). The wireless communication user equipment 200 (see FIG. 1) may receive the TPMI RBG bitmap, apply different precoding matrices respectively to the plurality of RBGs, and transmit, to the base station 100 (see FIG. 1), a PUSCH to which a different precoding matrix is applied for each RBG.

As described above, embodiments of the inventive concept have been disclosed with reference to the drawings. Although the embodiments have been described using specific terms herein, this is only used for the purpose of describing examples of the inventive concept and is not used to limit the meaning or scope of the inventive concept set forth in the claims. Therefore, those of ordinary skill in the art will understand that various modifications and other equivalent embodiments may be made therefrom. Accordingly, the true technical scope of the inventive concept should be determined by the appended claims.

We further describe a method as defined by clauses E1 and E2 below:

E1. An operating method of a wireless communication user equipment, the operating method comprising:

transmitting a sounding reference signal (SRS) to a base station;
receiving, from the base station, a transmit precoding matrix indicator (TPMI) resource block group (RBG) bitmap including information indicating a precoding matrix corresponding to each of a plurality of RBGs; and
transmitting a physical uplink shared channel (PUSCH) to the base station by applying different precoding matrices respectively to the plurality of RBGs, based on the TPMI RBG bitmap,
wherein each of the plurality of RBGs includes at least one resource block (RB).

E2. The operating method of E1,

wherein each of the plurality of RBGs includes a plurality of RBs, and
wherein the plurality of RBs are consecutive in a frequency domain.

Similarly, we note that an operating method of a wireless communication user equipment may include transmitting a sounding reference signal (SRS) to a base station, receiving, from the base station, a transmit precoding matrix indicator (TPMI) resource block group (RBG) bitmap including information indicating a precoding matrix corresponding to each of a plurality of RBGs, and transmitting a physical uplink shared channel (PUSCH) to the base station by applying different precoding matrices respectively to the plurality of RBGs, based on the TPMI RBG bitmap, wherein each of the plurality of RBGs includes at least one resource block (RB).

While embodiments of the inventive concept has been particularly shown and described, it will be understood that various changes in form and details may be made therein without departing from the scope of the following claims.

**Claims**

1. An operating method of a wireless communication user equipment, the operating method comprising:

   transmitting a sounding reference signal, SRS, to a base station;
   receiving, from the base station, a transmit precoding matrix indicator, TPMI, indicating a precoding matrix and a rank indicator, RI indicating a rank value;
   selecting a precoding matrix among a set of precoding matrices, based on the TPMI and the RI;
   allocating a gain to each of a plurality of transmission paths within the wireless communication user equipment, based on the precoding matrix and loss information of each of the plurality of transmission paths; and
   transmitting a physical uplink shared channel (PUSCH) through the plurality of transmission paths to the base station.

2. The operating method of claim 1,
   wherein the allocating of the gain comprises:

   generating a loss variance value by calculating a variance of the loss information of each of the plurality of transmission paths; and
   allocating the gain to each of the plurality of transmission paths, based on a result of comparing the loss variance value with a second threshold value.

3. The operating method of claim 2,
   wherein, when the loss variance value is less than or equal to the second threshold value, allocating an equal gain to each of the plurality of transmission paths.

4. The operating method of any one of the preceding claims,

   wherein the allocating of the gain comprises calculating a gain allocation matrix by calculating relative loss information, based on the loss information of each of the plurality of transmission paths,
   wherein the gain is allocated to each of the plurality of transmission paths, based on the gain allocation matrix and the precoding matrix, and
   wherein the gain allocation matrix is a square matrix including a plurality of diagonal components, and each of the plurality of diagonal components is relative loss information of a corresponding one of the plurality of transmission paths.

5. The operating method of any one of the preceding claims,
   wherein, in the allocating of the gain, the gain allocated to each of the plurality of transmission paths is inversely proportional to relative loss information of each of the plurality of transmission paths.

6. The operating method of any one of the preceding claims,
   wherein a rank value of the RI is 1.

7. The operating method of any one of the preceding claims,
   wherein, in the allocating of the gain, the gain allocated to each of the plurality of transmission paths is proportional to relative loss information of each of the plurality of transmission paths.

8. The operating method of any one of the preceding claims,
   wherein a rank value of the RI is 2.

9. The operating method of any one of claims 4 to 8, wherein the relative loss information of a transmission path is a ratio of loss information of the path to a sum of loss information of each of the plurality of transmission paths.

10. The operating method of any one of the preceding claims, wherein a said loss information of a transmission path defines a degree to which power of a signal transmitted through the path varies due to characteristics of the transmission path, and/or wherein a said loss information is a loss value.

11. The operating method of any one of the preceding claims,

wherein the plurality of transmission paths include a first transmission path and a second transmission path, and wherein the allocating of the gain comprises, when a difference between loss information of the first transmission path and loss information of the second transmission path is less than or equal to a first threshold value, allocating an equal gain to each of the first transmission path and the second transmission path.

12. A wireless communication user equipment comprising:

a communication circuit configured to transmit a sounding reference signal, SRS, to a base station and receive, from the base station, a transmit precoding matrix indicator, TPMI, indicating a precoding matrix and a rank indicator, RI, indicating a rank value; and
a processor configured to:

select a precoding matrix among a set of precoding matrices, based on the TPMI and the RI;
calculate a gain allocation matrix, based on loss information of each of a plurality of transmission paths; and
allocate a gain to each of the plurality of transmission paths, based on the gain allocation matrix and the precoding matrix,

wherein the communication circuit is further configured to transmit a physical uplink shared channel (PUSCH) to the base station through the plurality of transmission paths to which the gain is allocated.

13. The wireless communication user equipment of claim 12,

wherein the gain allocation matrix is a square matrix including a plurality of diagonal components, and
wherein each of the plurality of diagonal components is relative loss information based on the loss information of a corresponding one of the plurality of transmission paths.

14. The wireless communication user equipment of claim 12 or 13,

wherein the communication circuit is further configured to transmit signals and receive the transmitted signals through the plurality of transmission paths, and
wherein the processor is further configured to calculate the loss information corresponding to each of the plurality of transmission paths based on a power difference between the transmitted signals and the received signals.

15. The wireless communication user equipment of any one of claims 12 to 14,
wherein the processor is further configured to generate a loss variance value by calculating a variance of the loss information of each of the plurality of transmission paths, and when the loss variance value is less than or equal to a preset second threshold value, allocate an equal gain to each of the plurality of transmission paths.

# FIG. 1

10

COVERAGE

100

BASE STATION

PUSCH

200

WIRELESS
COMMUNICATION
USER EQUIPMENT

# FIG. 2

# FIG. 3

<u>200</u>

210

PROCESSOR

220

COMMUNICATION
CIRCUIT

230

MEMORY

# FIG. 4

220

221

FIRST
TRANSMISSION PATH
222-1

SECOND
TRANSMISSION PATH
222-2

PRECODER

N-TH
TRANSMISSION PATH
222-N

# FIG. 5

# FIG. 6A

SIMULATION RESULT (Rank1)

Legend:
- ○ MRT based gain allocation
- * Equal gain allocation
- ◇ Compensation based gain allocation

Y-axis: SPECTRAL EFFICIENCY (bps/Hz)
X-axis: SNR (dB)

# FIG. 6B

SIMULATION RESULT (Rank2)

Legend:
- —◇— Compensation based gain allocation
- —✳— Equal gain allocation
- —○— MRT based gain allocation

Y-axis: SPECTRAL EFFICIENCY (bps/Hz)
X-axis: SNR (dB)

# FIG. 7

```
        ( START )
            |
            v
+---------------------------------+
|  TRANSMIT SRS TO BASE STATION   |——— S100
+---------------------------------+
            |
            v
+---------------------------------+
|  RECEIVE, FROM BASE STATION, TPMI INDICATING  |——— S200
|  PRECODING MATRIX AND RI INDICATING RANK VALUE |
+---------------------------------+
            |
            v
+---------------------------------+
|  SELECT PRECODING MATRIX BASED ON TPMI AND RI  |——— S300
+---------------------------------+
            |
            v
+---------------------------------+
|  ALLOCATE GAIN TO EACH OF PLURALITY OF  |——— S400
|  TRANSMISSION PATHS BASED ON PRECODING PATH |
|  AND LOSS INFORMATION OF EACH OF  |
+---------------------------------+
            |
            v
+---------------------------------+
|  TRANSMIT PUSCH THROUGH PLURALITY OF  |——— S500
|  TRANSMISSION PATHS  |
+---------------------------------+
            |
            v
        (  END  )
```

# FIG. 8

# FIG. 9

WIRELESS COMMUNICATION USER EQUIPMENT 200b

BASE STATION 100b

SRS 910

TPMI RBG bitmap, RI 920

PUSCH 930

# FIG. 10

SIMULATION RESULT

# FIG. 11

START

RECEIVE SRS FROM WIRELESS COMMUNICATION USER EQUIPMENT ── S600

PERFORM CHANNEL ESTIMATION FOR WIRELESS COMMUNICATION USER EQUIPMENT BASED ON SRS ── S700

ALLOCATE FREQUENCY RESOURCE INCLUDING PLURALITY OF RBGS BASED ON RESULT OF CHANNEL ESTIMATION ── S800

GENERATE TPMI RBG BITMAP INCLUDING INFORMATION INDICATING DIFFERENT PRECODING MATRICES RESPECTIVELY FOR PLURALITY OF RBGS ── S900

TRANSMIT TPMI RBG BITMAP TO WIRELESS COMMUNICATION USER EQUIPMENT ── S1000

END

Europäisches
Patentamt

European
Patent Office

Office européen
des brevets

## EUROPEAN SEARCH REPORT

Application Number

**EP 23 20 4257**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/115531 A1 (GAAL PETER [US] ET AL) 10 May 2012 (2012-05-10) * paragraphs [0045] – [0049], [0076] – [0079]; figure 10 * ----- | 1-15 | INV. H04B7/0404 H04B7/0456 |
| | | | TECHNICAL FIELDS SEARCHED (IPC) |
| | | | H04B |

The present search report has been drawn up for all claims

| Place of search | Date of completion of the search | Examiner |
|---|---|---|
| Munich | 7 March 2024 | Sälzer, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 20 4257

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2024

| Patent document cited in search report | | Publication date | Patent family member(s) | | Publication date |
|---|---|---|---|---|---|
| US 2012115531 | A1 | 10-05-2012 | CN 102884847 | A | 16-01-2013 |
| | | | EP 2567582 | A1 | 13-03-2013 |
| | | | JP 6495096 | B2 | 03-04-2019 |
| | | | JP 2013531412 | A | 01-08-2013 |
| | | | JP 2015181268 | A | 15-10-2015 |
| | | | KR 20130038266 | A | 17-04-2013 |
| | | | US 2012115531 | A1 | 10-05-2012 |
| | | | WO 2011140507 | A1 | 10-11-2011 |

EPO FORM P0459

For more details about this annex : see Official Journal of the European Patent Office, No. 12/82